# EUROPÄISCHE PATENTSCHRIFT

(11) **EP 1 862 419 B1**
(45) Veröffentlichungstag und Bekanntmachung des Hinweises auf die Patenterteilung: **13.04.2011**
(21) Anmeldenummer: 07108977.5
(22) Anmeldetag: 25.05.2007
(51) Int. Cl.: B66B 5/16, F16D 63/00, F16D 65/54

(54) **Aufzugsanlage mit einer Bremseinrichtung und Verfahren zum Bremsen in einer Aufzugsanlage**
Lift facility with a braking device and method for braking a lift facility
Installation d'élévation ayant un dispositif de freinage et procédé de freinage dans une installation d'élévation

(30) Priorität: 29.05.2006 EP 06114631
(43) Veröffentlichungstag der Anmeldung: 05.12.2007
(73) Patentinhaber: Inventio AG, 6052 Hergiswil (CH)
(72) Erfinder: Gremaud, Nicolas, CH-8820, Wädenswil (CH); Kocher, Hans, 6044, Udligenswil (CH); Muff, Josef A., 6024, Hildisrieden (CH)

(56) Entgegenhaltungen:
- EP-A- 0 648 703
- EP-A- 1 671 912
- DE-B- 1 675 157
- US-A- 5 103 940

## Beschreibung

Die Erfindung betrifft eine Aufzugsanlage mit einer Aufzugskabine und ein Verfahren zum Bremsen einer Aufzugskabine gemäss Oberbegriff der unabhängigen Patentansprüche.

Die Aufzugsanlage ist in einem Schacht eingebaut. Der Schacht besteht in der Regel aus festen Baustoffen, er kann jedoch auch, zumindest teilweise, offen sein. Die Aufzugsanlage besteht im Wesentlichen aus einer Kabine, zum Transport von Personen und/oder Gütern. Die Kabine ist über Tragmittel mit einem Gegengewicht verbunden. Mittels eines Antriebes, der wahlweise auf die Tragmittel, direkt auf die Kabine oder das Gegengewicht einwirkt, wird die Kabine entlang einer, im Wesentlichen vertikalen, Kabinenfahrbahn verfahren und mittels einer Bremse wird die Kabine in einem Halt gehalten oder aus einem Fahrzustand zu einem Haltzustand gebremst.

Üblicherweise wird zum Halten und Bremsen im Betriebszustand eine Bremse verwendet welche beim Antrieb angeordnet ist und zum Halten und Bremsen im Notfall wird eine Fangvorrichtung verwendet welche an der Kabine angeordnet ist. Der Betriebszustand umfasst beispielsweise die normalen Betriebsabläufe wie, warten in einer Etage oder in einem Halt, aufnehmen oder entladen von Lasten, verfahren der Kabine zu einer anderen Etage, anhalten der Kabine oder Aktivitäten zur Ausführung von Servicearbeiten an der Aufzugsanlage. Der Notfall umfasst demgegenüber beispielsweise Fehlverhalten beim Betrieb wie z.B. Überladen der Kabine, Versagen von Bauteilen, wie Reissen eines Tragmittels oder Defekte in Steuerung oder Mechanik.
Neuere Lösungen zum Halten und Bremsen sehen vor, dass eine, vielfach an der Kabine angeordnete Bremseinrichtung verwendet wird, welche im Bedarfsfalle zum Eingriff gelangt und beide Zustände, sowohl den Betriebszustand wie den Notfall erfasst.

Aus EP0648703 ist eine derartige Bremseinrichtung bekannt. Eine an der Kabine angebrachte Bremseinrichtung wird bedarfsgerecht angesteuert und sie kann Anforderungen erfüllen, welche sich aus dem Betriebszustand und dem Notfall ergeben. Diese Bremseinrichtung hat die Eigenschaft, dass sich bei Verschleiss einer Bremsplatte ein Lüftspalt verändert. Dies bewirkt, dass die Zeit um die Bremseinrichtung zur Bremsung zu bringen verändert, in der Regel vergrössert wird, da ein grösserer Zustellweg zurückgelegt werden muss oder es müssen verschleissfeste Bremsplatten eingesetzt werden. Es gibt beispielsweise keramische Bremswerkstoffe die speziell verschleissfest sind. Derartige Materialien sind jedoch sehr teuer. Verschleiss ergibt sich aus dem Abrieb von Bremsmaterial beim Bremsen.
In der Patentanmeldung US2006/180406 ist eine Bremseinrichtung beschrieben, welche Verschleiss von Bremsplatten kompensieren kann. Die dort dargestellte Verschleisskompensation kann eine Gesamtsumme von Lüftspalten einstellen oder sie kann eine Bremskraft unabhängig des Verschleisses von Bremsplatten einstellen. Auch diese Bremseinrichtung bedingt, dass die Gesamtsumme von Lüftspalten derart gross gewählt wird, dass der Verschleiss einzelner Bremsplatten sich nicht negativ auswirkt. Dies bewirkt ebenfalls, dass die Zeit um die Bremseinrichtung zur Bremsung zu bringen entsprechend vergrössert wird, oder dass entsprechend verschleissbeständige Bremsplatten verwendet werden müssen.
EP-A-1671912, der zum Zeitpunkt der prioritätsbegründenden Anmeldung nicht veröffentlicht war, offenbart eine Aufzugsanlage gemäss dem Oberbegriff des Anspruchs 1 und eines Verfahren gemäss dem Oberbegriff des Anspruchs 16.
Aufgaben dieser Erfindung bestehen darin eine Aufzugsanlage mit einer Aufzugskabine und ein Verfahren zum Bremsen und Halten einer Aufzugskabine bereitzustellen welche(s) einen Betrieb über eine lange Betriebszeit ermöglicht. Sie sollte tolerant in Bezug auf Ungenauigkeiten der Kabinenfahrbahn sein und im Bedarfsfalle sollte ein schnelles Ansprechen möglich sein. Im Weiteren soll die Bremseinrichtung trotzdem günstig, d.h. unter anderem mit günstigen, nicht verschleissfesten Bremsplatten betrieben werden können.

Die in den unabhängigen Patentansprüchen definierte Erfindung löst mindestens eine dieser Aufgaben. Die Aufzugsanlage beinhaltet eine Aufzugskabine, welche sich in vertikaler Richtung entlang von Führungsbahnen bewegt. Im Bedarfsfalle wird die Aufzugskabine von einer Bremseinrichtung gebremst oder im Stillstand gehalten. Die Bremseinrichtung besteht aus mindestens zwei Bremseinheiten. Jede der Bremseinheiten weist mindestens einen Bremsbelag auf, welcher im Bedarfsfalle mit einer Bremsbahn zusammenwirkt,
Erfindungsgemäss ist mindestens eine der Bremseinheiten, vorzugsweise jedoch jede der Bremseinheiten, mit einer Verschleisskompensationseinrichtung versehen, welche bei entlasteter Bremseinrichtung einen, zwischen dem Bremsbelag und der Bremsbahn entstehenden, Lüftspalt entsprechend einem im Wesentlichen konstanten Wert einstellt. Der Lüftspalt ist eine freie Distanz zwischen dem Bremsbelag und zugeordneter Bremsfläche, welche sich beim Öffnen einer Bremse ergibt.

Dadurch wird erreicht, dass gebräuchliche und somit kostengünstige Bremsmaterialien verwendet werden können welche beim Gebrauch verschleissen. Ein verschlissenes Bremsmaterial würde zwangsläufig zu einem grösseren Lüftspalt führen. Ein grösserer Lüftspalt würde einen grösseren Zeitbedarf bedingen um die Bremseinheit in Bremsstellung zu bringen. Die erfindungsgemässe Verschleisskompensationseinrichtung bewirkt nun den Vorteil, dass ein Betrieb der Bremseinrichtung, über eine lange Betriebszeit ermöglicht ist -da eine Verschleisskompensationseinrichtung auftretenden Verschleiss kompensiert-, dass die Bremseinrichtung tolerant in Bezug auf Ungenauigkeiten einer Bremsbahn ist -da ein Lüftspalt entsprechend den zu erwartenden Ungenauigkeiten vorgegeben werden kann- und dass die Bremseinrichtung im Bedarfsfalle schnell ansprechen kann -da als Folge von Verschleiss kein grösserer Zustellweg erforderlich wird. Die Bremsbahn kann eine eigens zum Zweck des Bremsens vorgesehen Bahn sein, oder sie kann identisch der Führungsbahn sein. Ungenauigkeiten in dieser Bremsbahn oder Führungsbahn ergeben sich einerseits durch ein Zusammenfügen von einzelnen Bahn-Teilstücken zu einer Bahn, sowie durch Abweichungen der Bahn über eine gesamte Länge, infolge Gebäudesetzungen, thermischen Dehnungsdifferenzen etc.

In einer vorteilhaften Ausführung beinhaltet die Bremseinheit ein Bremsgehäuse, eine in Bezug auf das Bremsgehäuse bewegliche Bremsplatte und eine in Bezug auf das Bremsgehäuse feste Bremsplatte wobei die Bremsplatten im Bedarfsfalle mittels einer Zustelleinrichtung mit einer Bremsbahn in Kontakt gebracht werden. Die Zustelleinrichtung enthält eine Zustellkontrolle, welche einen gesamten Zustellweg erkennt und kontrolliert. Die Verschleisskompensationseinrichtung hält hierbei einen Lüftspalt auf der Seite der festen Bremsplatte im Wesentlichen konstant und die Zustelleinrichtung hält einen gesamten Lüftspalt konstant. Im Falle einer Betätigung der Bremseinheit erfolgt somit in einem ersten Schritt die Zustellung der beweglichen Bremsplatte mittels der Zustelleinrichtung bis die bewegliche Platte die Bremsbahn berührt. Dann wird durch weitere Betätigung der Zustelleinrichtung das Bremsgehäuse mit der festen Bremsplatte zu einer Gegenseite der Bremsbahn gedrückt bis die feste Bremsplatte die Gegenseite der Bremsbahn berührt. Nun erfolgt durch eine weitere Zustellbewegung ein Spannen der Bremsplatten zur Bremsbahn wodurch die Bremsung erfolgt. Ein Abrieb bzw. ein Verschleiss der beweglichen Bremsplatte wird direkt durch eine weitere Zustellung der beweglichen Bremsplatte durch die Zustelleinrichtung kompensiert. Ein Verschleiss der festen Bremsplatte erfolgt indirekt indem die Zustelleinrichtung das Bremsgehäuse mit der festen Bremsplatte weiter zustellt und diese Zustellung des Bremsgehäuses wird von der Verschleisskompensationseinrichtung festgestellt. Die so erreichte Zustellposition des Bremsgehäuses mit der festen Bremsplatte bildet die End-Arbeitsposition des festen Bremsbelages. Diese End-Arbeitsposition bildet die Basis für eine Zurückstellung des Bremsgehäuses mit der festen Bremsplatte. Beim Öffnen der Bremseinheit ergibt sich sinngemäss der umgekehrte Ablauf. Die Zustelleinrichtung entspannt die Bremsplatten, danach wird das Bremsgehäuse zusammen mit der festen Bremsplatte, beginnend von der End-Arbeitsposition entsprechend dem eingestellten Lüftspalt der festen Bremsplatte zurückgestellt uns sobald die feste Bremsplatte ihren Lüftspalt erreicht hat wird die bewegliche Bremsplatte um den restlichen Betrag des gesamten Lüftspaltes zurückgezogen.
Diese Ausführung ermöglicht die Bereitstellung einer kostengünstigen Bremseinheit, da eine Zustellregelung alleine den gesamten Lüftspalt kontrolliert und die Verschleisskompensationseinrichtung den Lüftspalt der festen Bremsseite einstellt, was mit einfachen Mitteln realisiert werden kann.

Vorteilhafterweise entspricht der gesamte Lüftspalt dem zweifachen Betrag des Lüftspaltes der Seite der festen Bremsplatte. Dies erlaubt eine gleichmässige Aufteilung des Lüftspaltes auf die Seite der festen und der beweglichen Bremsplatte. Es kann im Einzelfall vorteilhaft sein den Lüftspalt asymmetrisch, beispielsweise im Verhältnis 1 zu 3, zu verteilen. Dies ist bei Verwendung eines einseitig belasteten Führungssystems - beispielsweise einer "Rucksack geführten Kabine" - von Vorteil, da auf einer weniger belasteten Seite, im Vergleich zu einer hochbelasteten Seite, ein kleinerer Lüftspalt sinnvoll sein kann.

Die Bremseinheit ist entlang der Bremsbahn geführt. Die Art der Führung definiert unter anderem erforderliche Durchfahrtsspiele und damit den erforderlichen Lüftspalt. In einer vorteilhaften Ausführung beinhaltet die Bremseinheit einen Führungssupport, welcher direkt mittels eines Führungsschuhs, im wesentlichen Spielfrei, der Bremsbahn entlang geführt ist. Die Verschleisskompensationseinrichtung, vorzugsweise eine mechanische Verschleisskompensationseinrichtung, ist dabei an einer Verbindungsstelle zwischen dem Führungssupport und dem Bremsgehäuse angeordnet. Diese Anordnung ist vorteilhaft, da damit die Bremseinheit sehr exakt der Bremsbahn entlang geführt ist und somit die zum Ausgleich von Führungsungenauigkeiten erforderlichen Lüftspalten gering gehalten werden kann.
Bei dieser Ausführung müssen im Wesentlichen lediglich Bahnabweichungen in Betracht gezogen werden, welche sich durch das Zusammenfügen von einzelnen Bahn-Teilstücken ergeben. Typischerweise ergeben sich hierbei Lüftspalten von jeweils 0,15 bis 0,35 mm.
Die Aufzugskabine ist dabei in einer ersten Ausführungsvariante mittels eigenen Kabinenführungsschuhen ihrer Fahrbahn entlang geführt und eine Verbindungsstelle von der Aufzugskabine zum Führungssupport überträgt Brems- und/oder Haltekräfte in vertikaler Richtung und ermöglicht seitlichen Ausgleich von Führungsungenauigkeiten. Dies erlaubt eine komfortbestimmte Führung der Aufzugskabine, ist jedoch kostenintensiver, da individuelle Führungselemente für Aufzugskabine und Bremseinheit erforderlich werden.
In einer zweiten Ausführungsvariante ist die Aufzugskabine mittels des Führungssupports der Bremseinrichtung, bzw. von in diesem Führungssupport integrierten Führungsschuhen geführt, und eine Verbindungsstelle von der Aufzugskabine zum Führungssupport überträgt seitliche Führungskräfte und Brems-und/oder Haltekräfte in vertikaler Richtung. Die Kosten sind reduziert da die Funktionalität der Kabinenführung in der Führung der Bremseinheit integriert ist.

In einer anderen Ausführung ist der Führungssupport als Teil der Aufzugskabine ausgeführt. Die Verschleisskompensationseinrichtung ist entsprechend an einer Verbindungsstelle zwischen dem Führungssupport, bzw. der Aufzugskabine und dem Bremsgehäuse angeordnet. Ein Lüftspalt muss hierbei so gross ausgeführt sein, dass die erwarteten Führungsabweichungen aufgenommen werden können. Diese Alternative verlangt in der Regel einen, im Vergleich zu den vorgenannten Ausführungen, grösseren Lüftspalt, was einen entsprechend längeren Zustellweg bzw. Zustellzeit bedingt. Diese Einflüsse sind bei der Auslegung des Bremssystems zu berücksichtigen. Bei dieser Ausführung müssen im Wesentlichen sowohl die Bahnabweichungen in Betracht gezogen werden, welche sich durch das Zusammenfügen von einzelnen Bahn-Teilstücken ergeben wie auch Bahnabweichungen welche sich beispielsweise durch Montageungenauigkeiten, Gebäudesetzung oder auch thermischen Dehnungen ergeben. Damit derartige Abweichungen einen Fahrkomfort nicht beeinflussen, ergeben sich bei dieser Ausführung typischerweise Lüftspalten von jeweils 0,75 bis 1.5 mm oder mehr. Es ist klar, dass die durch diese grösseren Lüftspalten entstehenden Ansprechverzögerungen beim Bremseinsatz bei der Auslegung der Bremsen berücksichtigt werden müssen.

Die mechanische Verschleisskompensationseinrichtung enthält zumindest einen Positionierteil, einen Rückstellspeicher, beispielsweise in der Form einer Feder, und eine Rutschverbindung, beispielsweise in der Art einer Reibverbindung. Der Positionierteil ist innerhalb des gewünschten Lüftspaltes zwischen Führungssupport und Bremsgehäuse gleitend über eine Gleitverbindung angeordnet und er ist weiter im Betrag eines im Extremfalle zu erwartenden Verschleisses rutschend verschiebbar. Der Positionierteil wird dabei, wenn keine weiteren Kräfte wirken durch den Rückstellspeicher in einer Ruhelage oder Standby-Position gehalten. Diese Position entspricht zugleich der unbetätigten, bzw. geöffneten Bremseinheit. Die zum Verschieben der Rutschverbindung erforderliche Verstellkraft ist grösser als die durch den Rückstellspeicher erwirkte Rückstellkraft.
Beim Betätigen der festen Bremsplatte wird der Positionierteil entsprechend seinem frei verschiebbaren Gleitweg, der im Wesentlichen dem Lüftspalt entspricht, in der Gleitverbindung gegen den Rückstellspeicher wirkend, verschoben. Bei einer weiteren Zustellbewegung, welche beispielsweise durch Verschleiss erforderlich wird, wird der Positionierteil in der Rutschverbindung verschoben. Beim Öffnen der festen Bremsplatte schiebt nun der Rückstellspeicher den Positionierteil entsprechend dem in der Gleitverbindung frei verschiebbaren Gleitweg zurück, womit sich der zugehörige Lüftspalt einstellt.

Diese einfache mechanische Verschleisskompensationseinrichtung ist günstig herzustellen, einfach in der Funktion und entsprechend funktionssicher.

Optional ermöglicht die Verschleisskompensationseinrichtung eine Einstellung des gewünschten Lüftspaltes, bspw. mittels einer Lüftspieleinstellschraube oder -Mutter. Dies ist vorteilhaft, da die Bremseinheit auf die Bedürfnisse vor Ort eingestellt werden kann

Vorteilhafterweise weist der Führungssupport einen Halter auf, welcher vertikale Bremskräfte direkt beim Bremsbelag oder dessen Befestigungsplatte aufnimmt, die vertikalen Bremskräfte in den Führungssupport und in die Kabine einleitet und das Bremsgehäuse von vertikalen Kräften im Wesentlichen entlastet. Dies ist vorteilhaft, da deswegen das Bremsgehäuse mit den beweglichen Elementen wie Zustelleinrichtung und Verschleisskompensationseinrichtung lediglich entsprechend Zustellkräften dimensioniert sein müssen. Dies erlaubt leichter und kostengünstiger herzustellen.

Weitere vorteilhafte Ausführungen sind in weiteren abhängigen Ansprüchen beschrieben. Im Folgenden wird die Erfindung sowie weitere Ausführungsvarianten anhand von Ausführungsbeispielen im Zusammenhang mit den Figuren näher erläutert. Bauteile gleiche Funktion sind in den Figuren gleich bezeichnet.

Es zeigen:
- **Fig. 1**: einen Teil einer Aufzugsanlage in einer schematischen Seitenansicht
- **Fig. 1a**: eine schematische Draufsicht dieser Aufzugsanlage
- **Fig. 2**: eine schematische Ansicht einer Bremseinheit mit Verschleisskompensationseinrichtung und in Aufzugskabine integriertem Führungs-support
- **Fig. 3**: eine Detailansicht einer einstellbaren Verschleisskompensationseinrichtung
- **Figuren 4**: beispielhaften Funktionsablauf zur Kompensation von Verschleiss
- **Fig. 4.1**: Bremseinheit im Neu-Zustand Ruhelage (ohne Verschleiss)

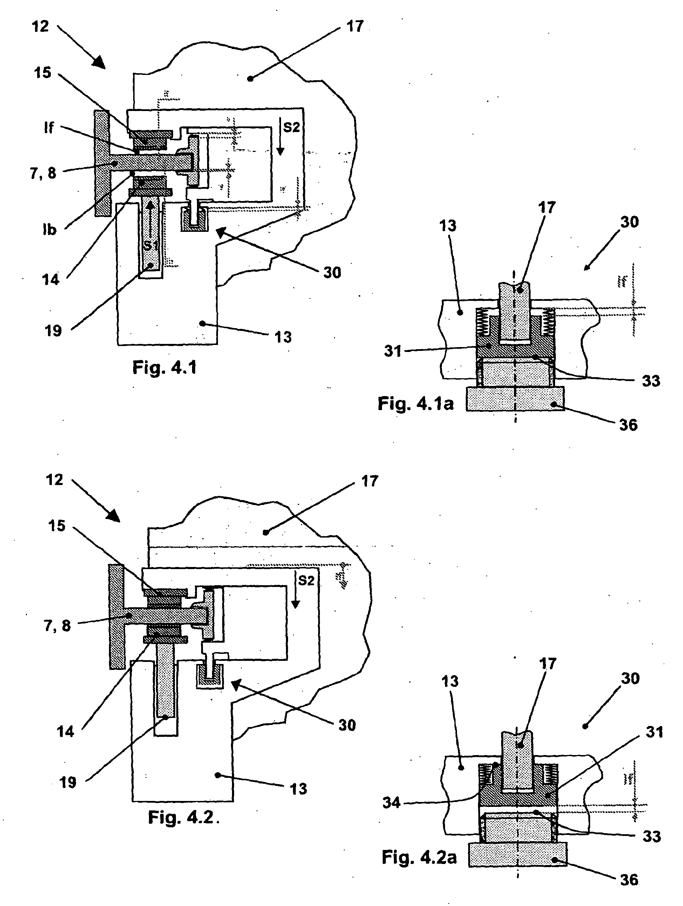

- **Fig. 4.1a**: Detailansicht der Verschleisskompensationseinrichtung zu Fig. 4.1
- **Fig. 4.2**: Bremseinheit im Neu-Zustand Bremsposition(ohne Verschleiss)
- **Fig. 4.2a**: Detailansicht der Verschleisskompensationseinrichtung zu Fig. 4.2

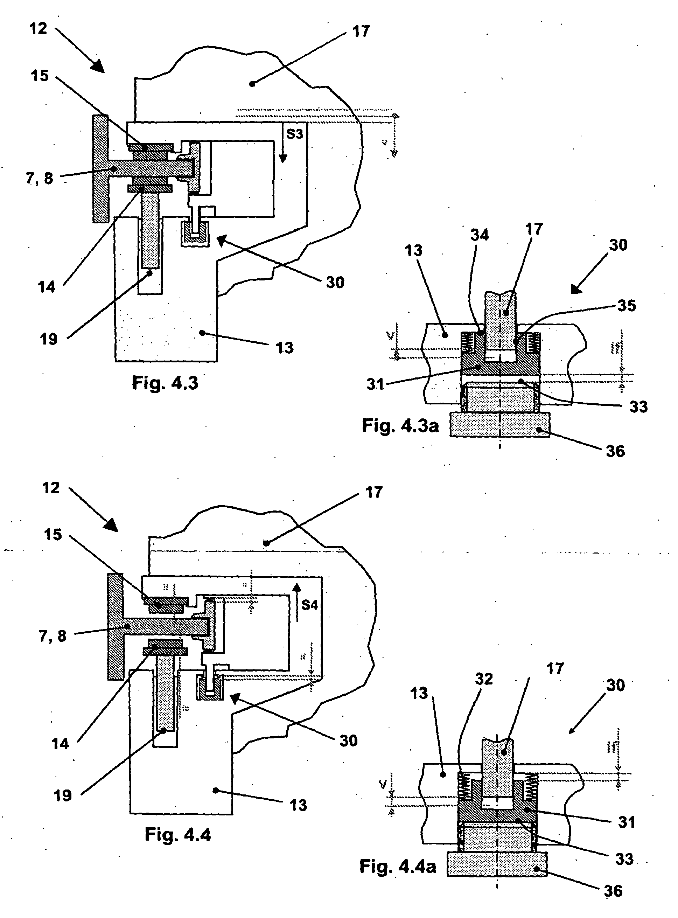

- **Fig. 4.3**: Bremseinheit im gebrauchten Zustand (mit Verschleiss)
- **Fig. 4.3a**: Detailansicht der Verschleisskompensationseinrichtung zu Fig. 4.3
- **Fig. 4.4**: Bremseinheit im gebrauchten Zustand (mit Verschleiss)
- **Fig. 4.4a**: Detailansicht der Verschleisskompensationseinrichtung zu Fig. 4.4

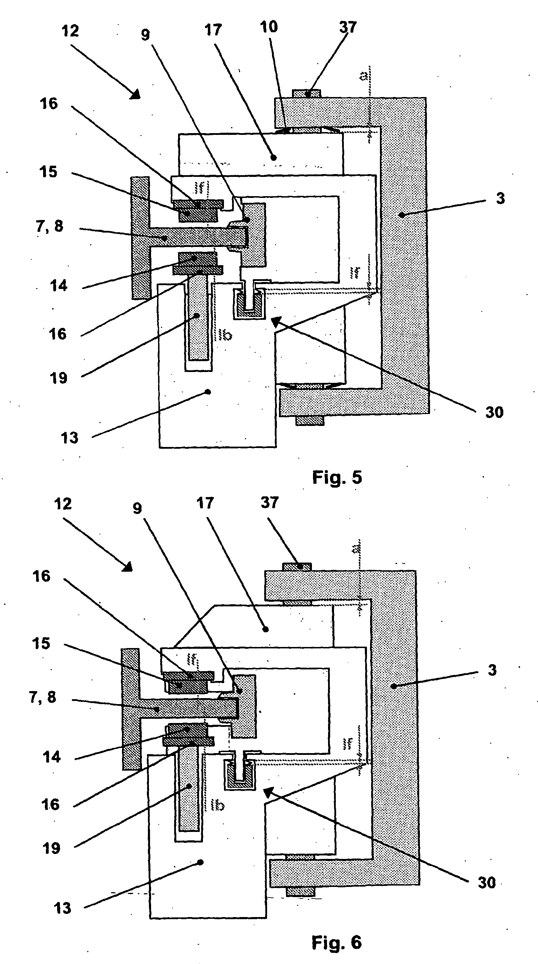

- **Fig. 5**: eine schematische Ansicht einer Bremseinheit mit Verschleisskompensationseinrichtung und in Bremseinheit integrierter Aufzugskabi-nenführung
- **Fig. 6**: eine schematische Ansicht einer Bremseinheit mit Verschleisskompensationseinrichtung und getrennter Führung für Bremseinheit und Aufzugskabine

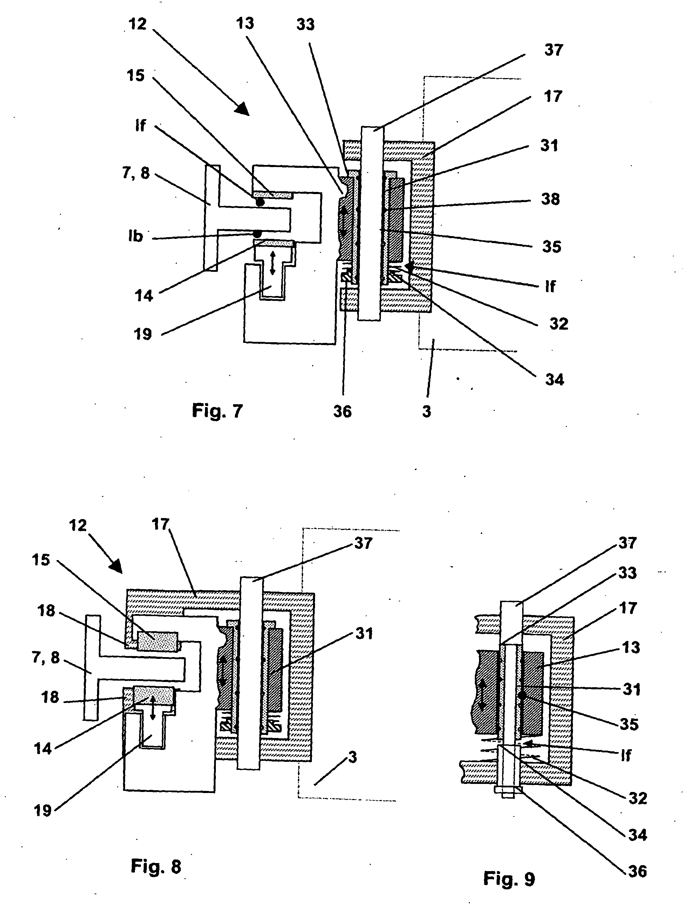

- **Fig. 7**: ein weiteres schematisches Ausführungsbeispiel einer Bremseinheit mit Verschleisskompensationseinrichtung
- **Fig. 8**: eine Bremseinheit gemäss Fig. 7 mit integriertem Halter
- **Fig. 9**: ein anderes schematisches Ausführungsbeispiel einer Bremseinheit mit Verschleisskompensationseinrichtung und Tragbolzen

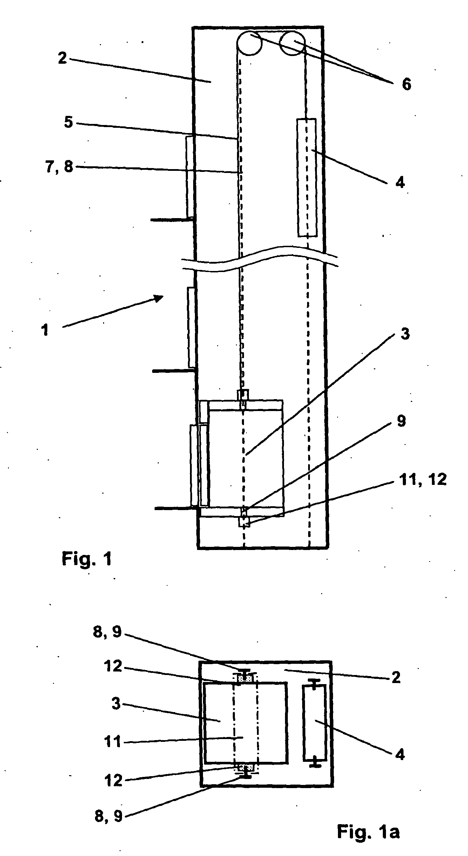

Eine mögliche Gesamtanordnung einer Aufzugsanlage ist in den Fig. 1 und Fig. 1a dargestellt. Fig. 1 zeigt die Aufzugsanlage 1 in einer schematischen Seitenansicht und Fig. 1a zeigt dieselbe Aufzugsanlage 1 in einer schematischen Draufsicht. Die dargestellte Aufzugsanlage 1 beinhaltet eine Aufzugskabine 3 welche sich in vertikaler Richtung in einem Schacht 2 entlang von Führungsbahnen 7 bewegt. Die Aufzugskabine 3 ist von Tragmitteln 5 getragen und zu einem Gegengewicht 4 verbunden. Gegengewicht 4 und Aufzugskabine 3 sind über das Tragmittel 5 von einem Antrieb 6 getrieben und bewegen sich gegengleich im Aufzugsschacht 2. Die Aufzugskabine 3 ist mit einer Bremseinrichtung 11 versehen, welche die Aufzugskabine bremst oder im Stillstand hält. Die Bremseinrichtung 11 beinhaltet mindestens zwei Bremseinheiten 12, welche je auf eine Führungsbahn 7 wirken. Die Bremseinheiten 12 wirken zusammen als eine einzige Bremseinrichtung 11, wobei die Bremseinrichtung 11 optional den Bremskraftbedarf für eine einzelne individuelle Bremseinheit 12 definieren kann. Die Bremseinheiten 12 sind im gezeigten Beispiel unterhalb des Kabinenkörpers 3 angebaut. Aber auch ein Anbau seitlich und / oder oberhalb der Aufzugskabine 3 ist möglich. Selbstverständlich sind auch Kombinationen dieser Anbauorte denkbar. Dies wäre vor allem sinnvoll, wenn zur Erweiterung der Bremsleistung mehrere Bremseinheiten 12 verwendet werden. Die Aufzugskabine ist mit Führungsschuhen 9 versehen, welche die Kabine 2-3 entlang der Führungsbahn 7 führt. Im dargestellten Beispiel ist die Führungsbahn 7 durch eine T-förmige Führungsschiene gebildet, welche zugleich auch Bremsbahn 8 ist. Andere Formen von Aufzugsanlagen sind selbstverständlich möglich. Es kann eine selbstgetriebene Aufzugskabine, beispielsweise mit Linearmotor, verwendet werden, der Aufzugschacht kann teilweise offen sein oder es können separate Bahnen zum Führen (Führungsbahn 7) und zum Bremsen (Bremsbahn 8) verwendet werden.

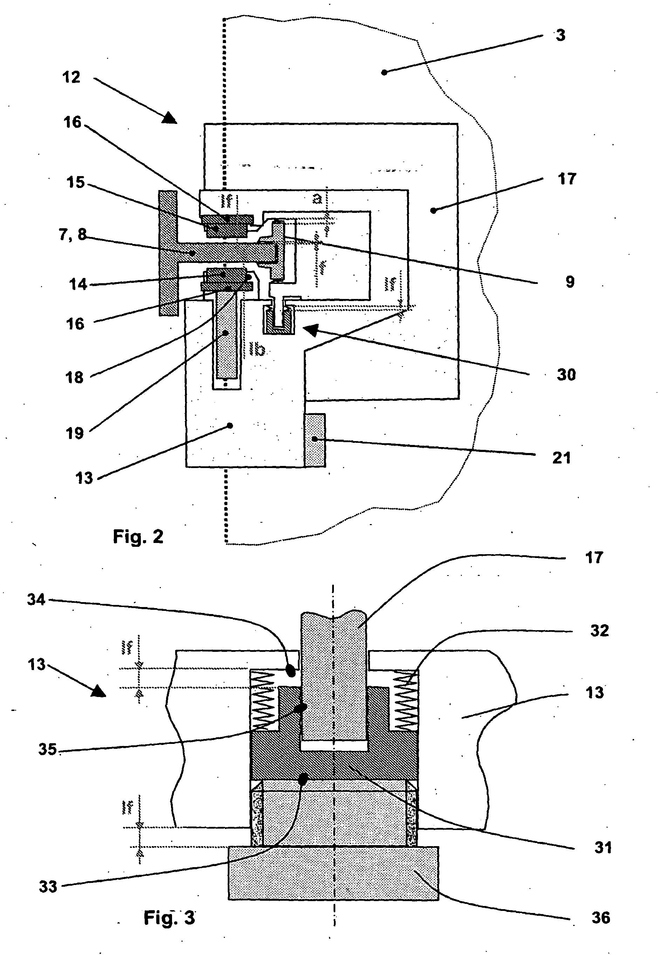

Fig. 2 zeigt eine schematische Aufzugsbremseinheit 12 wie sie entsprechend der Erfindung in der Aufzugsanlage 1 gemäss Fig. 1 verwendet ist. Die Bremseinheit 12 ist an die Kabine 3 angebaut. Die Bremseinheit 12 beinhaltet ein Bremsgehäuse 13, eine in Bezug auf das Bremsgehäuse 13 bewegliche Bremsplatte 14 und eine in Bezug auf das Bremsgehäuse 13 feste Bremsplatte 15. Die Bremsplatten 14,15 werden im Bedarfsfalle mittels einer Zustelleinrichtung 19 mit der Bremsbahn 8 in Kontakt gebracht. Die Bremsplatten 14,15 sind mittels Befestigungsplatten 16 zum Bremsgehäuse 13 bzw. zur Zustelleinrichtung 19 verbunden. Die Bremsbahn 8 ist im dargestellten Beispiel zugleich die Führungsbahn 7, wobei eine herkömmliche T-Führungsschiene verwendet ist. Die Bremseinheit 12 enthält weiter einen Führungssupport 17. Der Führungssupport 17 dient zur Befestigung oder Verbindung des Bremsgehäuses 13 zur Kabine 3. Er ist mit der Kabine 3 fest verbunden. Eine Verschleisskompensationseinrichtung 30 Ist im dargestellten Beispiel zwischen dem Führungssupport 17 und dem Bremsgehäuse 13 angeordnet. Der Führungssupport 17 beinhaltet zugleich den Führungsschuh 9 welcher die Aufzugskabine 3 der Führungsbahn 7 entlang führt. Der Führungsschuh 9 ist zur Kabine 3 elastisch gehalten. Dies ermöglicht eine Isolation von Führungsschwingungen. Ein elastisches Zwischenglied erlaubt der Kabine 3 Schwingungsabweichungen (a) zur Führungsbahn 7. Ein Lüftspalt If, Ib der Bremseinheit ist in diesem Falle so gross eingestellt, dass auch bei einem Ausschwingen der Kabine im Rahmen der Führungselastizität (a) und allfälliger Führungsspiele (f) sowie Versetzungen beim Zusammenstossen von Führungsbahnteilen keine Berührung der Bremsplatte 14,15 mit der Führungsbahn 7 bzw. Bremsbahn 8 erfolgt.

Die Verschleisskompensationseinrichtung 30 hält nun einen festen Lüftspalt (If), beim Lüften der Bremse 12, auf der Seite der festen Bremsplatte 15 im Wesentlichen konstant Die dargestellte Bremseinheit 12 besteht weiter aus elektromechanischen Bauteilen. Sie enthält eine Zustellregelung 21, welche einen vorgegebenen gesamt Lüftspalt (It) konstant hält. Der gesamte Lüftspalt (It) ist durch die Summe des festen Lüftspalts (If) und des beweglichen Lüftspaltes (Ib) gebildet, wobei der feste Lüftspalt (If) der Seite der festen Bremsplatte 15 und der bewegliche Lüftspalt (Ib) der Seite der beweglichen Bremsplatte 14 entspricht. Die Begriffe fest und beweglich sind in diesem Zusammenhang lediglich zur Definition verwendet. Die Zustellregelung 21 bewegt die bewegliche Bremsplatte 14 direkt senkrecht zur Brems- bzw. Führungsfläche 7,8. In der Regel sind mehrere Verschleisskompensatlonseinrichtungen 30 parallel, vorzugsweise übereinander, angeordnet.

Die Bremseinheit 12 ist eine elektromechanische Bremseinheit, bei der der bewegliche Bremsbelag 14 mittels eines elektromechanischen Antriebs, wie beispielsweise einem Spindelantrieb, zugestellt wird. Bedarfsweise ist die Zustellüber eine Getriebestufe betätigt ist. Die Bremseinheit 12 enthält vorzugsweise eine Zustellkontrolle. Mittels dieser Zustellkontrolle kann ein Bremsplattenverschleiss und / oder Abweichungen von einem Normalverhalten der Bremseinheit 12 ermittelt werden und der Gesamtverschleiss kann mit dieser Methode kontrolliert werden.
In der Regel ist die Verschleisskompensationseinrichtung 30 derart eingestellt, dass der Lüftspalte (If) der Seite der festen Bremsplatte 15 gleich einem Lüftspalt (Ib) der beweglichen Bremsplatte 14 ist. Er entspricht somit der Hälfte des gesamten Lüftspaltes (It). Diese Einstellung ist zweckmässig, wenn es sich um zentrisch aufgehängte oder zentrisch geführte Aufzugskabinen 3 handelt. Die Verschleisskompensationseinrichtung 30 ermöglicht aber auch asymmetrische Einstellungen, womit eine ungleichmässige Aufteilung der Lüftspalten (If, Ib) erreicht werden kann. Dies ist besonders bei asymmetrisch aufgehängten Aufzugskabinen sinnvoll, wo sich ein allfälliger Verschleiss von Führungsschuhen 9 einseitig bemerkbar macht.

Der Führungssupport 17 beinhaltet im weiteren einen Halter 18. Der Halter 18 stützt die Bremsplatten 14,15 oder die Befestigungsplatten 16 und leitet Bremskräfte direkt in den Führungssupport 17 und weiter in die Kabine 3. Das Bremsgehäuse 13 selbst ist dadurch von der eigentlichen Bremskraft entlastet, es muss lediglich die in einer Richtung wirkende Normalkraft, welche über Reibung die Bremskraft erzeugt, übernehmen.

Fig. 3 stellt eine einstellbare Verschleisskompensationseinrichtung 30 im Detail dar. Die Verschleisskompensationseinrichtung 30 besteht aus einem Positionierteil 31, einer Rückstelleinheit 32, einem ersten Anschlag 33 und einem zweiten Anschlag 34. Die Verschleisskompensationseinrichtung 30 stellt eine Verbindung vom Bremsgehäuse 13 zum Führungssupport 17 her. In diesem Ausführungsbeispiel ist der Positionierteil 31 über eine Rutschverbindung 35 zum Führungssupport 17 verbunden. Der Positionierteil 31 ist vorzugsweise aus Kunststoff hergestellt. Er kann nur mit einer wesentlichen Kraft von beispielsweise etwa 25N bis 50N gegenüber dem Führungssupport 17 verschoben werden. Der Positionierteil 31 selbst ist im Bremsgehäuse 13 leichtgängig, gleitend angeordnet. Dadurch lässt sich das Bremsgehäuse 13 zum Führungssupport 17 zweistufig verschieben. Die Richtung der Verschiebbarkeit ist dabei in Richtung der Normalkraft gerichtet. In einer ersten Verschiebestufe kann das Bremsgehäuse 13 zum Positionierteil 31 gleitend -und damit auch zum Führungssupport 17 gleitend- mit geringer Kraft geschoben werden. Diese Gleitverschiebbarkeit ist durch den ersten 33 Anschlag und den zweiten Anschlag 34 begrenzt. Diese erste Verschiebestufe entspricht dem gewünschten Lüftspalt (If) der festen Bremsplattenseite. Im Beispiel ist diese erste Verschiebestufe, bzw. der Lüftspalt (If) mittels einer Lüftspieleinstellschraube 36 einstellbar. Die zwischen Bremsgehäuse 13 und Positionierteil 31 angeordnete Rückstelleinheit 32 in der Form einer Feder schiebt hierbei das Bremsgehäuse 13 bis zur Begrenzungsmarke des ersten Anschlags 33.
In einer zweiten Verschiebestufe kann das Bremsgehäuse 13 zusammen mit dem Positionierteil 31 zum Führungssupport 17 rutschend verschoben werden.

Die Figurenserie 4, beinhaltend die Fig. 4.1 bis 4.4a, erläutert nun beispielhaft den Funktionsablauf zur Kompensation von Verschleiss.Fig. 4.1, 4.2, 4.3 und 4.4 zeigen jeweils eine beispielhafte Arbeitsstellung der Bremseinheit und die Details gemäss Fig. 4.1 a, 4.2a, 4.3a und 4.4a zeigen die jeweils zugehörige Stellung der Verschleisskompensationseinrichtung.

Fig.4.1 und Fig. 4.1a zeigt die Bremseinheit 12 in der Betriebsstellung, d.h. die Bremse ist offen. Die Bremsbeläge 14,15 sind beidseitig der Bremsbahn 8 um den Lüftspalt (If, Ib) distanziert. Der Positionierteil 31 der Verschleisskompensationseinheit 30 ist gegen den von der Lüftspieleinstellschraube 36 definierten ersten Anschlag 33 gedrückt. Der mögliche Freischiebeweg oder Gleitweg des Positionierteiles 31 ist entsprechend dem gewünschten festen Lüftspalt (If) eingestellt. Im Falle einer Betätigung der Bremseinheit 12 erfolgt somit in einem ersten Schritt (S1) die Zustellung der beweglichen Bremsplatte 14 mittels der Zustelleinrichtung 19 bis die bewegliche Platte 14 die Bremsbahn 8 berührt und dann wird durch weitere Betätigung der Zustelleinrichtung 19 das Bremsgehäuse 13 mit der festen Bremsplatte 15 zu der Gegenseite der Bremsbahn 8 gedrückt (S2) bis die feste Bremsplatte 15 die Gegenseite der Bremsbahn 8 berührt. Nun erfolgt durch eine weitere Zustellbewegung ein Spannen der Bremsplatten 14,15 zur Bremsbahn 8 wodurch die Bremsung erfolgt.
Diese Arbeitsstellung ist in den Fig. 4.2 und 4.2.a dargestellt. Es ist im Folgenden dargestellt wie nun das Lüftspiel in der Verschleisskompensationseinheit 30 kompensiert wird. Der Positionierteil 31 steht am zweiten Anschlag 34 an.
Ein Abrieb bzw. ein Verschleiss der beweglichen Bremsplatte 14 wird nun, wie in den Fig. 4.3 und 4.3a dargestellt, direkt durch eine weitere Zustellung der beweglichen Bremsplatte 14 durch die Zustelleinrichtung 19 kompensiert. Eine Kompensation eines Verschleisses (v) der festen Bremsplatte 15 erfolgt indirekt indem die Zustelleinrichtung 19 das Bremsgehäuse 13 mit der festen Bremsplatte 15 weiter zustellt (S3) oder zuzieht und diese Zustellung des Bremsgehäuses 13 bewirkt in der Verschleisskompensationseinrichtung 30 ein Rutschen in der Rutschverbindung 35 zwischen Bremsgehäuse 13 und Führungssupport 17 da der Gleitweg des Positionierteils 31 bereits aufgebraucht ist. Die nun so erreichte Zustellposition des Bremsgehäuses 13 mit der festen Bremsplatte 15 bildet die End-Arbeitsposition des festen Bremsbelages 15 in dieser Bremssequenz. Diese End-Arbeitsposition bildet nun zwangsläufig die Basis für eine Zurückstellung des Bremsgehäuses 13 mit der festen Bremsplatte 15.
Beim Öffnen der Bremseinheit 12 ergibt sich sinngemäss der umgekehrte Ablauf der zum Zustand gemäss Fig. 4.4 und 4.4a führt. Die Zustelleinrichtung 19 entspannt die Bremsplatten 14,15, darnach wird das Bremsgehäuse 13 zusammen mit der festen Bremsplatte 15, beginnend von der End-Arbeitsposition entsprechend dem eingestellten Lüftspalt (If) der festen Bremsplatte 15 zurückgestellt (S4). Diese Rückstellung wird durch die Rückstelleinheit 32 bewirkt, welche das Bremsgehäuse 13 gegen den Positionierteil 31 wirkend entsprechend dem eingestellten Lüftweg (If) zum ersten Anschlag 33 zurückschiebt. Wie in Fig. 4.4a ersichtlich ist nun der Positionierteil 31 um den Verschleissbetrag (v) gegenüber dem Führungssupport 17 rutscht. Die feste Bremsplatte 15 hat ihren Lüftspalt (If) erreicht und die bewegliche Bremsplatte 14 kann nun um den restlichen Betrag des gesamten Lüftspaltes (Ib=It-If) zurückgezogen werden. Die Bremseinheit ist für die nächste Bremsung bereit und die Zustellwege entsprechen dem Neuzustand. Damit können auch Betätigungszeiten wie sie für die neue Bremse galten auch für eine verschlissene Bremse eingehalten werden.

Fig. 5 zeigt eine schematische Ansicht einer Bremseinheit mit Verschleisskompensationseinrichtung und in Bremseinheit integrierter Aufzugskabinenführung. Der Führungssupport 17 ist direkt von einem Führungsschuh 9 entlang der Brems- und Führungsbahn 7,8 geführt, während die Kabine 3 über ein elastisches Element 10, beispielsweise eine Gummifeder, einen Dämpfer oder eine aktive Schwingungsdämpfung zum Führungssupport 17 befestigt ist. Die Funktion der Bremseinrichtung 11 selbst entspricht den vorgängigen Darstellungen. Der Vorteil dieser Lösung ergibt sich dadurch, dass der Lüftspalt lf kleiner ausgeführt werden kann, da ein Schwingweg der Kabine nicht berücksichtigt werden muss. Selbstverständlich ist die Anbindung des Führungssupports 17 derart ausgelegt, dass vertikale Brems- und Haltekräfte übertragen werden können.

Fig. 6 zeigt eine schematische Ansicht einer Bremseinheit mit Verschleisskompensationseinrichtung und getrennter Führung für Bremseinheit und Aufzugskabine. Der Führungssupport 17 ist direkt von einem Führungsschuh 9 entlang der Brems- und Führungsbahn 7,8 geführt, und die Kabine 3 ist von eigenen Führungselementen (nicht dargestellt) geführt. Die Funktion der Bremseinrichtung 11 selbst entspricht den vorgängigen Darstellungen. Der Vorteil dieser Lösung ergibt sich dadurch, dass der Lüftspalt (If) ebenfalls kleiner ausgeführt werden kann, da ein Schwingweg der Kabine 3 nicht berücksichtigt werden muss und eine Auslegung der Führungsschuhe 9 der Bremse kann unabhängig von der Kabine 3 erfolgen.

Fig. 7 zeigt ein weiteres schematisches Ausführungsbeispiel einer Bremseinheit mit Verschleisskompensationseinrichtung 30. Der Führungssupport 17 ist zur Kabine 3 befestigt, Das Bremsgehäuse 13 ist über den Positionierteil 31 und einen Tragbolzen 37 zum Führungssupport 17 verbunden. Der Tragbolzen 37 ist sinngemäss ein Teil des Führungssupports 17. Das Bremsgehäuse 13 ist auf dem hülsenförmigen Positionierteil 31 gleitend verschiebbar, wobei die Verschiebbarkeit auf dem Positionierteil 31 durch eine Gleitbegrenzung, welche mittels Lüftspieleinstellschraube, bzw. Lüftspieleinstellmutter 36, entsprechend dem gewünschten Lüftspalt If eingestellt werden kann, begrenzt ist. Die Rückstelleinheit 32 drückt das Bremsgehäuse 13 bei entspannter Zustelleinrichtung 19 in die Lüftposition zum ersten Anschlag 33. Bei auftretendem Verschleiss (v) kann der Positionierteil 31 auf dem Tragbolzen 37 rutschen, was zu einer Verschleisskompensation, wie sinngemäss in der Figurenserie 4 erläutert, führt. Zwei derartige Tragbolzenanordnungen sind vorzugsweise übereinander angeordnet, wodurch auch Bremskräfte direkt übertragbar sind. Die Rutschverbindung 35 ist in diesem Ausführungsbeispiel besonders kostengünstig gelöst. Im Positionierteil 31 sind O-Ringe 38 eingefügt und der Positionierteil 31 ist mit leichter Pressung auf den Tragbolzen 37, der vorteilhafterweise aus Metall bzw. Stahl hergestellt ist, aufgeschoben. Vorzugsweise ist diese Rutschverbindung 35 gefettet. Die Definition der erforderlichen Rutschkraft erfolgt in Abstimmung der Definition der Rückstelleinheit. Die zum Rutschen erforderliche Kraft liegt um mehr als etwa 40% über der von der Rückstelleinheit aufbringbaren Kraft.
Anstelle der gezeigten Rutschverbindung 35 auf Reibbasis könnten auch Rastverbindungen verwendet werden. Rastverbindungen stellen sich schrittweise nach.

Fig. 8 zeigt eine Bremseinheit gemäss Fig. 7 mit integriertem Halter. Der in Fig. 7 bereits dargestellte Führungssupport 17 ist mit einem Halter 18 versehen, welcher die Bremsplatten 14, 15 beim Bremsen direkt stützt und somit Brems und Haltekräfte in den Führungssupport 17 einleitet. Dadurch ist das Bremsgehäuse 13 zusammen mit der Verschleisskompensationseinrichtung 30, und der gesamten Zustelleinrichtung 19, lediglich mit Normalkräften belastet.

Fig. 9 zeigt ein anderes schematisches Ausführungsbeispiel einer Bremseinheit mit Verschleisskompensationseinrichtung und Tragbolzen. Das Bremsgehäuse 13 ist ebenfalls wie in Fig. 7 erläutert über den Positionierteil 31 und Tragbolzen 37 zum Führungssupport 17 verbunden. Der Tragbolzen 37 ist sinngemäss ein Teil des Führungssupports 17. Das Bremsgehäuse 13 ist auf dem hülsenförmigen Positionierteil 31 gleitend verschiebbar angeordnet. Die Verschiebbarkeit auf dem Positionierteil 31 wird durch eine Gleitbegrenzung, welche mittels Lüftspieleinstellschraube, bzw. Lüftspieleinstellmutter 36 entsprechend dem gewünschten Lüftspalt (If) eingestellt werden kann, begrenzt. Die Funktionalität der Gleitbegrenzung ist in diesem Beispiel in den Tragbolzen 37 integriert und die Funktionalität des Rutschens ist zwischen Bremsgehäuse 13 und Positionierteil 31 integriert. Die Rückstelleinheit 32 drückt das Bremsgehäuse 13 bei entspannter Zustelleinrichtung 19 zum ersten Anschlag 33 in die Lüftposition. Bei auftretendem Verschleiss v kann das Bremsgehäuse 13 auf dem Positionierteil 31 rutschen, was zu einer Verschleisskompensation wie sinngemäss in der Figurenserie 4 erläutert führt. Auch hier sind vorzugsweise zwei derartige Tragbolzenanordnungen übereinander angeordnet, wodurch die Bremskräfte direkt auf den Führungssupport übertragen würden.

Bei Kenntnis der vorliegenden Erfindung und der gezeigten Ausführungsvarianten kann der Aufzugsfachmann die gesetzten Formen und Anordnungen beliebig verändern und kombinieren. Beispielsweise kann die gezeigte Verwendung von O-Ringen, die Lösung der Tragbolzen wie auch die Anordnung von Führungselementen oder die Verwendung eines Halters mit den dargestellten Anordnungen von Verschleisskompensationseinrichtungen kombiniert werden. Ebenfalls kann der Führungsschuh unter Verwendung bekannter Technologien gestaltet werden. Im Besonderen kann ein Gleitführungsschuh oder ein Rollenführungsschuh verwendet werden. Der Führungsschuh kann ein Messsystem enthalten anhand dessen eine Fahr-Geschwindigkeit der Bremseinrichtung, bzw. der Kabine ermittelt werden kann. Diese Information kann beispielsweise von einer Regeleinheit der Bremseinrichtung verwendet werden. Auch eine geregelte Lüftspieleinstellung unter Verwendung eines Servomotors ist möglich. Dabei würde beispielsweise ein Lüftspiel (If) der festen Bremsplattenseite abhängig vom Betriebszustand der Aufzugsanlage verändert, indem mittels Servomotor die Lüftspiel-Einstellschraube zu oder aufgedreht würde.

## Patentansprüche

1. Aufzugsanlage (1) mit einer Aufzugskabine (3), welche sich in vertikaler Richtung entlang von Führungsbahnen (7) bewegt,
die Aufzugskabine (3) wird im Bedarfsfalle von einer Bremseinrichtung (11) gebremst oder im Stillstand gehalten,
die Bremseinrichtung (11) beinhaltet mindestens zwei Bremseinheiten (12), wobei jede der Bremseinheiten (12) einen Bremsbelag (14, 15) aufweist, welcher im Bedarfsfalle mit einer diesem Bremsbelag zugeordneten Bremsfläche einer Bremsbahn (8) zusammenwirkt,
**gekennzeichnet dadurch, dass**
mindestens eine der Bremseinheiten (12) eine Verschleisskompensationseinrichtung (30) enthält, welche beim Lüften dieser Bremseinheit (12) einen zwischen dem Bremsbelag (14, 15) und der zugeordneten Bremsfläche der Bremsbahn (8) entstehenden Lüftspalt (If) entsprechend einem im Wesentlichen konstanten Wert einstellt.

2. Aufzugsanlage gemäss Anspruch 1 **dadurch gekennzeichnet,**
**dass** die Bremseinheit (12) ein Bremsgehäuse (13), eine in Bezug auf das Bremsgehäuse (13) bewegliche Bremsplatte (14) und eine in Bezug auf das Bremsgehäuse (13) feste Bremsplatte (15) beinhaltet und
**dass** die Bremsplatten (14, 15) im Bedarfsfalle mittels einer Zustelleinrichtung (19) mit der Bremsbahn (8) in Kontakt bringbar sind und
**dass** die Verschleisskompensationseinrichtung (30) den Lüftspalt (If) auf der Seite der festen Bremsplatte (15) im wesentlichen konstant hält und die Zustelleinrichtung (19) einen gesamten Lüftspalt (It) konstant hält.

3. Aufzugsanlage gemäss Anspruch 2 **dadurch gekennzeichnet, dass** die Zustelleinrichtung (19) einen elektromechanischen Spindelantrieb beinhaltet, wobei die Spindel Bedarfsweise über eine Getriebestufe betätigt ist.

4. Aufzugsanlage gemäss einem der Ansprüche 2 oder 3 **dadurch gekennzeichnet, dass**
die Bremseinheit (12) aus elektromechanischen Bauteilen besteht und eine Zustellregelung (21) enthält, mittels welcher ein vorgegebener gesamter Lüftspalt (It) eingestellt werden kann und
die elektromechanische Bremseinheit (12) eine Zustellkontrolle enthält, mittels welcher ein Bremsplattenverschleiss und / oder Abweichungen von einem Normalverhalten der Bremseinheit (12) ermittelt werden kann.

5. Aufzugsanlage gemäss einem der Ansprüche 2 bis 4 **dadurch gekennzeichnet, dass**
der gesamte Lüftspalt (It) dem zweifachen Betrag des festen Lüftspaltes (If) auf der Seite der festen Bremsplatte (15) entspricht.

6. Aufzugsanlage gemäss einem der vorstehenden Ansprüche **dadurch gekennzeichnet, dass**
die Aufzugsanlage (1) eine Führungsschiene (7.8) enthält, welche zugleich Führungsbahn (7) und Bremsbahn (8) ist.

7. Aufzugsanlage gemäss einem der vorstehenden Ansprüche **dadurch gekennzeichnet, dass**
die Bremseinheit (12) einen Führungssupport (17) beinhaltet und die mechanische Verschleisskompensationseinrichtung (30) an einer Verbindungsstelle zwischen dem Führungssupport (17) und dem Bremsgehäuse (13) angeordnet ist, wobei
der Führungssupport (17) mittels eines Führungsschuhs (9), im Wesentlichen spielfrei, der Bremsbahn (8) entlang geführt ist
oder
der Führungssupport (17) fest mit der Aufzugskabine (3) verbunden oder ein Bestandteil der Aufzugskabine (3) ist, wobei die Aufzugskabine (3) mittels eines Führungsschuhs (9) der Führungsbahn (7) entlang geführt ist

8. Aufzugsanlage gemäss Anspruch 7 **dadurch gekennzeichnet, dass** der Führungsschuh (9) ein Gleitführungsschuh ist und /oder der Führungsschuh (9) eine Führungsrolle enthält und /oder der Führungsschuh (9) ein Messsystem enthält anhand dessen eine FahrGeschwindigkeit der Bremseinrichtung (11), bzw. der Kabine (3) ermittelt werden kann.

9. Aufzugsanlage gemäss einem der Ansprüche 7 oder 8 **dadurch gekennzeichnet, dass**
der Führungssupport (17) einen Halter (18) aufweist, welcher vertikale Bremskräfte beim Bremsbelag (14,15) oder dessen Befestigungsplatte (16) aufnimmt, die vertikalen Bremskräfte in den Führungssupport (17) und in die Kabine (3) einleitet und das Bremsgehäuse (13) von vertikalen Kräften im Wesentlichen entlastet.

10. Aufzugsanlage gemäss Anspruch 9 **dadurch gekennzeichnet, dass** die Bremsplatten (14,15) mittels Befestigungsplatte (16) zum Bremsgehäuse (13) oder zur Zustelleinrichtung (19) verbunden ist und diese Befestigungsplatte (16) mit dem Halter (18) eine Tragstelle bildet welche eine Einleitung von vertikalen Bremskräften von der Bremsplatte (14,15) in den Halter (18) ermöglicht, das Bremsgehäuse (13) von vertikalen Bremskräften entlastet ist und welche gleichzeitig ein horizontales Zustellen des Bremsbelages (14,15) zur Bremsbahn (8) ermöglicht.

11. Aufzugsanlage gemäss einem der vorstehenden Ansprüche 7 bis 10 **dadurch gekennzeichnet, dass**
die Verschleisskompensationseinrichtung (30) einen Positionierteil (31) beinhaltet, welcher über eine Rutschverbindung (35) oder Rastverbindung mit dem Bremsgehäuse (13) oder dem Führungssupport (17) verbunden ist, und welcher Positionierteil (31) wechselseitig über eine Gleitverbindung mit dem Führungssupport (17) bzw. dem Bremsgehäuse (13) verbunden ist,
wobei die Gleitverbindung ein relatives Gleiten zwischen dem Bremsgehäuse (13) und dem Führungssupport (17) entsprechend dem gewünschten Lüftspalt (If) ermöglicht und bei Überschreitung dieses Lüftspalts (If) ein relatives Rutschen in der Rutschverbindung stattfindet.

12. Aufzugsanlage gemäss einem der vorstehenden Ansprüche **dadurch gekennzeichnet, dass**
der Verschleisskompensationseinrichtung (30) eine Einstellung des gewünschten festen Lüftspaltes (If) ermöglicht.

13. Aufzugsanlage gemäss Anspruch 11 **dadurch gekennzeichnet, dass** das Bremsgehäuse (13) mittels einer Rückstelleinheit (32), vorzugsweise einer Feder, in Richtung der festen Bremsplatte (15) gedrückt ist, wobei die Rückstelleinheit (32) zwischen Bremsgehäuse (13) und Positionierteil (31), zwischen Positionierteil (31) und Führungssupport (17) oder zwischen Bremsgehäuse (13) und Führungssupport (17) angeordnet ist und wobei eine durch die Rückstelleinheit (32) erzeugte Rückstellkraft kleiner als eine in der Rutschverbindung (35) erzeugte Rutsch-Widerstandskraft ist, die durch die Rückstelleinheit (32) erzeugte Rückstellkraft jedoch grösser als die in der Gleitverbindung erzeugte Gleit-Widerstandskraft ist.

14. Aufzugsanlage gemäss Anspruch 4 **dadurch gekennzeichnet, dass** die Bewegung der beweglichen Bremsplatte (14) durch die Zustelleinrichtung (19) erfolgt, welche mittels der Zustellregelung (21) geregelt wird, und die Zustelleinrichtung die Bremsplatte (14) direkt senkrecht zur Bremsfläche bewegt.

15. Aufzugsanlage gemäss einem der vorstehenden Ansprüche **dadurch gekennzeichnet, dass**
die Bremseinrichtung (11) an der Aufzugskabine (3) angeordnet ist und die Bremseinheiten (12) unterhalb und / oder seitlich und / oder oberhalb eines Kabinenkörpers angebaut sind und die Bremseinheiten (12) bedarfsweise auf die Führungsbahn (7) einwirken.

16. Verfahren zum Bremsen und Halten einer Aufzugskabine,
die Aufzugskabine (3) ist Bestandteil einer Aufzugsanlage (1) und sie wird entlang von Führungsbahnen (7) bewegt,
die Aufzugskabine (3) wird im Bedarfsfalle von einer Bremseinrichtung (11) gebremst oder im Stillstand gehalten,
die Bremseinrichtung (11) beinhaltet mindestens zwei Bremseinheiten (12), wobei jede der Bremseinheiten (12) einen Bremsbelag (14, 15) aufweist, welcher im Bedarfsfalle mit einer diesem Bremsbelag zugeordneten Bremsfläche einer Bremsbahn (8) zusammenwirkt **gekennzeichnet dadurch, dass**
ein zwischen dem Bremsbelag (14, 15) und der zugeordneten Bremsfläche der Bremsbahn (8) entstehender Lüftspalt (If) beim Lüften mindestens einer der Bremseinheiten (12) mittels einer Verschleisskompensationseinrichtung (30) entsprechend einem im Wesentlichen konstanten Wert eingestellt wird.

## Claims

1. Lift installation (1) with a lift cage (3), which moves in vertical direction along guide tracks (7) and which in the case of need is braked or held at standstill by a braking equipment (11), the braking equipment (11) comprises at least two brake units (12), wherein each of the brake units (12) comprises a brake lining (14, 15) which in the case of need co-operates with a brake surface, which is associated with this brake lining, of a brake track (8), **characterised in that** at least one of the brake units (12) comprises a wear-compensating device (30) which on release of this brake unit (12) sets a clearance (If), which arises between the brake lining (14, 15) and the associated brake surface of the brake track (8), in correspondence with a substantially constant value.

2. Lift installation according to claim 1, **characterised in that** the brake unit (12) comprises a brake housing (13), a brake plate (14) movable with respect to the brake housing (13) and a brake plate (15) fixed with respect to the brake housing (13) and that the brake plates (14, 15) in the case of need can be brought into contact with the brake track (8) by means of an advance device (19) and that the wear-compensating device (30) keeps the clearance (If) on the side of the fixed brake plate (15) substantially constant and the advance device (19) keeps a total clearance (It) constant.

3. Lift installation according to claim 2, **characterised in that** the advance device (19) comprises an electromechanical spindle drive, wherein the spindle is in case of need actuated by way of a gear stage.

4. Lift installation according to one of claims 2 and 3, **characterised in that** the brake unit (12) consists of electromechanical components and comprises advance regulating means (21), by means of which a predetermined total clearance (It) can be set, and the electromechanical brake unit (12) comprises advance checking means by means of which brake plate wear and/or departures from normal behaviour of the brake unit (12) can be ascertained.

5. Lift installation according to any one of claims 2 to 4, **characterised in that** the total clearance (It) corresponds with twice the amount of the fixed clearance (If) on the side of the fixed brake plate (15).

6. Lift installation according to any one of the preceding claims, **characterised in that** the lift installation (1) comprises a guide rail (7, 8) which is at the same time the guide track (7) and brake track (8).

7. Lift installation according to any one of the preceding claims, **characterised in that** the brake unit (12) comprises a guide support (17) and the mechanical wear-compensating device (30) is arranged at a connecting point between the guide support (17) and the brake housing (12), wherein the guide support (17) is guided along the brake track (8) substantially free of play by means of a guide shoe (9) or the guide support (17) is fixedly connected with the lift cage (3) or is a component of the lift cage (3), wherein the lift cage (3) is guided along the guide track (7) by means of a guide shoe (9).

8. Lift installation according to claim 7, **characterised in that** the guide shoe (9) is a sliding guide shoe and/or the guide shoe (9) comprises a guide roller and/or the guide shoe (9) comprises a measuring system by way of which a travel speed of the braking equipment (11) or of the cage (3) can be determined.

9. Lift installation according to one of claims 7 and 8, **characterised in that** the guide support (17) comprises a holder (18), which accepts vertical braking forces in the brake lining (14, 15) or the fastening plate (16) thereof, introduces the vertical braking forces into the guide support (17) and into the cage (3) and substantially relieves the brake housing (13) of vertical forces.

10. Lift installation according to claim 9, **characterised in that** the brake plates (14, 15) are connected with the brake housing (13) or advance device (19) by means of a fastening plate (16) and this fastening plate (16) forms together with the holder (18) a support point which enables introduction of vertical braking forces from the brake plate (14, 15) into the holder (18), the brake housing (13) being relieved of vertical braking forces, and which at the same time enables horizontal advance of the brake lining (14, 15) towards the brake track (8).

11. Lift installation according to any one of the preceding claims 7 to 10, **characterised in that** the wear-compensating device (30) comprises a positioning part (31), which is connected by way of a slip connection (35) or detent connection with the brake housing (13) or the guide support (17) and which is mutually connected by way of a slide connection with the guide support (17) and the brake housing (13), wherein the slide connection enables relative sliding between the brake housing (13) and the guide support (17) in correspondence with the desired clearance (If) and a relative slipping in the slip connection takes place when this clearance (If) is exceeded.

12. Lift installation according to any one of the preceding claims, **characterised in that** the wear-compensating device (30) enables setting of the desired fixed clearance (If).

13. Lift installation according to claim 11, **characterised in that** the brake housing (13) is urged by means of a restoring unit (32), preferably a spring, in the direction of the fixed brake plate (15), wherein the restoring unit (32) is arranged between brake housing (13) and positioning part (31), between positioning part (31) and guide support (17) or between brake housing (13) and guide support (17) and wherein a restoring force produced by the restoring unit (32) is less than a slip resistance force produced in the slip connection (35), but the restoring force produced by the restoring unit (32) is greater than the slide resistance force produced in the slide connection.

14. Lift installation according to claim 4, **characterised in that** the movement of the movable brake plate (14) is carried out by an advance device (9) regulated by way of the advance regulating means (21) and the advance device moves the brake plate (14) directly perpendicularly to the brake surface.

15. Lift installation according to any one of the preceding claims, **characterised in that** the braking equipment (11) is arranged at the lift cage (3) and the brake units (12) are attached below and/or laterally of and/or above a cage body and the brake units (12) in case of need act on the guide track (7).

16. Method of braking and holding a lift cage, the lift cage (5) being a component of a lift installation (1) and moved along guide tracks (7), the lift cage (3) in the case of need being braked or held at standstill by braking equipment (11) and the braking equipment (11) comprising at least two brake units (12), wherein each of the brake units (12) comprises a brake lining (14, 15) which in the case of need co-operates with a brake surface, which is associated with this brake lining, of a brake track (8), **characterised in that** a clearance (If) arising between the brake lining (14, 15) and the associated brake surface of the brake track (8) on release of at least one of the brake units (12) is adjusted by means of a wear-compensating device (30) in correspondence with a substantially constant value.

## Revendications

1. Installation d'ascenseur (1) avec une cabine d'ascenseur (3) qui se déplace dans le sens vertical le long de guides (7),
la cabine (3) est en cas de besoin freinée ou maintenue à l'arrêt par un dispositif de freinage (11),
le dispositif de freinage (11) contient au moins deux unités de freinage (12), chacune des unités de freinage (12) présentant une garniture de frein (14, 15) qui coopère en cas de besoin avec une surface de freinage d'une glissière de freinage (8) associée à ladite garniture de frein,
**caractérisée en ce que** l'une au moins des unités de freinage (12) contient un dispositif de compensation d'usure (30) qui, lors du desserrage de cette unité de freinage (12), règle suivant une valeur globalement constante un interstice de desserrage (lf) qui se forme entre la garniture de frein (14, 15) et la surface de freinage associée de la glissière de freinage (8).

2. Installation d'ascenseur selon la revendication 1, **caractérisée en ce que** l'unité de freinage (12) contient un carter de frein (13), une plaque de frein (14) mobile par rapport au carter de frein (13) et une plaque de frein (15) fixe par rapport au carter de frein (13),
**en ce que** les plaques de frein (14, 15) sont aptes à venir en contact en cas de besoin avec la glissière de freinage (8) à l'aide d'un dispositif de positionnement (19), et
**en ce que** le dispositif de compensation d'usure (30) maintient globalement constant l'interstice de desserrage (If) du côté de la plaque de frein fixe (15), et le dispositif de positionnement (19) maintient constant un interstice de desserrage entier (It).

3. Installation d'ascenseur selon la revendication 2, **caractérisée en ce que** le dispositif de positionnement (19) contient un entraînement électromécanique à broche, la broche étant actionnée au besoin par l'intermédiaire d'un rapport de démultiplication.

4. Installation d'ascenseur selon l'une des revendications 2 ou 3, **caractérisée en ce que** l'unité de freinage (12) se compose de composants électromécaniques et contient une régulation de positionnement (21) à l'aide de laquelle un interstice de desserrage entier (lt) prédéfini peut être réglé,
et l'unité de freinage électromécanique (12) contient un contrôle de positionnement à l'aide duquel une usure de plaques de frein et/ou des écarts par rapport à un comportement normal de l'unité de freinage (12) peuvent être déterminés.

5. Installation d'ascenseur selon l'une des revendications 2 à 4, **caractérisée en ce que** l'interstice de desserrage entier (lt) correspond à deux fois l'interstice de desserrage fixe (If) du côté de la plaque de frein fixe (15).

6. Installation d'ascenseur selon l'une des revendications précédentes, **caractérisée en ce que** l'installation d'ascenseur (1) contient un rail de guidage (7, 8) qui est en même temps un guide (7) et une glissière de freinage (8).

7. Installation d'ascenseur selon l'une des revendications précédentes, **caractérisée en ce que** l'unité de freinage (12) contient un support de guidage (17), et le dispositif mécanique de compensation d'usure (30) est disposé à un endroit de liaison entre le support de guidage (17) et le carter de frein (13), étant précisé que
le support de guidage (17) est guidé le long de la glissière de freinage (8), globalement sans jeu, à l'aide d'un sabot (9), ou que
le support de guidage (17) est relié de manière fixe à la cabine d'ascenseur (3) ou fait partie de celle-ci, la cabine (3) étant guidée le long du guide (7) à l'aide d'un sabot (9).

8. Installation d'ascenseur selon la revendication 7, **caractérisée en ce que** le sabot (9) est un coulisseau et/ou le sabot (9) contient un galet de guidage et/ou le sabot (9) contient un système de mesure à l'aide duquel une vitesse du dispositif de freinage (11) ou de la cabine (3) peut être déterminée.

9. Installation d'ascenseur selon l'une des revendications 7 ou 8, **caractérisée en ce que** le support de guidage (17) comporte un élément de fixation (18) qui reçoit les forces de freinage verticales au niveau de la garniture de frein (14, 15) ou de la plaque de fixation (16) de celle-ci, qui introduit les forces verticales dans le support de guidage (17) et dans la cabine (3) et qui décharge globalement le carter de frein (13) de forces verticales.

10. Installation d'ascenseur selon la revendication 9, **caractérisée en ce que** les plaques de frein (14, 15) sont reliées à l'aide d'une plaque de fixation (16) au carter de frein (13) ou au dispositif de positionnement (19), et cette plaque de fixation (16) forme avec l'élément de fixation (18) un point porteur qui permet une introduction de forces de freinage verticales de la plaque de frein (14, 15) vers l'élément de fixation (18), qui décharge le carter de frein (13) de forces de freinage verticales et qui permet en même temps un positionnement horizontal de la garniture de frein (14, 15) par rapport à la glissière de freinage (8).

11. Installation d'ascenseur selon l'une des revendications précédentes 7 à 10, **caractérisée en ce que** le dispositif de compensation d'usure (30) contient un élément de positionnement (31) qui est relié par l'intermédiaire d'une liaison à patinage (34) ou d'une liaison par enclenchement au carter de frein (13) ou au support de guidage (17) et qui est relié en alternance au support de guidage (17) et au carter de frein (13) par l'intermédiaire d'une liaison à glissement, ladite liaison à glissement permettant un glissement relatif entre le carter de frein (13) et le support de guidage (17) suivant l'interstice de desserrage (lf) voulu, et un patinage relatif ayant lieu dans la liaison à patinage en cas de dépassement de cet interstice de desserrage (If).

12. Installation d'ascenseur selon l'une des revendications précédentes, **caractérisée en ce que** le dispositif de compensation d'usure (30) permet un réglage de l'interstice de desserrage fixe (If) voulu.

13. Installation d'ascenseur selon la revendication 11, **caractérisée en ce que** le carter de frein (13) est poussé en direction de la plaque de frein fixe (15) à l'aide d'une unité de rappel (32), de préférence un ressort, l'unité de rappel (32) étant disposée entre le carter de frein (13) et l'élément de positionnement (31), entre l'élément de positionnement (31) et le support de guidage (17) ou entre le carter de frein (13) et le support de guidage (17), et une force de rappel produite par l'unité de rappel (32) étant inférieure à une force de résistance au patinage, produite dans la liaison à patinage (35), la force de rappel produite par l'unité de rappel (32) étant néanmoins supérieure à la force de résistance au glissement produite dans la liaison à glissement.

14. Installation d'ascenseur selon la revendication 4, **caractérisée en ce que** le déplacement de la plaque de frein mobile (14) se fait grâce au dispositif de positionnement (19) qui est réglé à l'aide de la régulation de positionnement (21), et le dispositif de positionnement déplace la plaque de frein (14) directement perpendiculairement à la surface de freinage.

15. Installation d'ascenseur selon l'une des revendications précédentes, **caractérisée en ce que** le dispositif de freinage (11) est disposé sur la cabine d'ascenseur (3), les unités de freinage (12) sont installées au-dessous et/ou sur le côté et/ou au-dessus d'un corps de cabine et les unités de freinage (12) agissent au besoin sur le guide (7).

16. Procédé pour freiner et arrêter une cabine d'ascenseur,
la cabine d'ascenseur (3) fait partie d'une installation d'ascenseur (1) et elle est déplacée le long de guides (7),
la cabine (3) est en cas de besoin freinée ou maintenue à l'arrêt par un dispositif de freinage (11),
le dispositif de freinage (11) contient au moins deux unités de freinage (12), chacune des unités de freinage (12) comporte une garniture de frein (14, 15) qui coopère en cas de besoin avec une surface de freinage, associée à ladite garniture de frein, d'une glissière de freinage (8),
**caractérisé en ce qu'**un interstice de desserrage (lf) qui se forme entre la garniture de frein (14, 15) et la surface de freinage associée de la glissière de freinage (8) est réglé suivant une valeur globalement constante, lors du desserrage de l'une au moins des unités de freinage (12), à l'aide d'un dispositif de compensation d'usure (30).
